# EUROPÄISCHE PATENTSCHRIFT

(11) **EP 1 927 516 B1**
(45) Veröffentlichungstag und Bekanntmachung des Hinweises auf die Patenterteilung: **06.01.2010**
(21) Anmeldenummer: 07021204.8
(22) Anmeldetag: 30.10.2007
(51) Int. Cl.: B60R 21/06, B60R 21/13

(54) **Flurförderzeug mit einer vor einer Stellvorrichtung bewegbaren Fahrerrückhaltevorrichtung**
Industrial truck with a driver retaining device moveable in front of an operating device
Chariot de manutention doté d'un dispositif de maintien de conducteur pouvant être déplacé devant un dispositif de réglage

(30) Priorität: 30.11.2006 DE 102006056639
(43) Veröffentlichungstag der Anmeldung: 04.06.2008
(73) Patentinhaber: STILL GmbH, 22113 Hamburg (DE)
(72) Erfinder: Bergmann, Ansgar, 22941 Bargtheide (DE); Heitmann, Claus, 21680 Stade (DE); Rademacher, Frank, 22147 Hamburg (DE); Tügel, Casper, 20253 Hamburg (DE); Vellinga, Heiko, 22303 Hamburg (DE); Wünsch, Alexander, 21505 Geesthacht (DE)
(74) Vertreter: Geirhos, Johann

(56) Entgegenhaltungen:
- EP-A- 1 686 015
- DE-A1- 10 323 259
- DE-A1- 10 335 800
- GB-A- 2 010 754
- US-A- 5 971 434

## Beschreibung

Die Erfindung betrifft ein Flurförderzeug mit einer Fahrerrückhaltevorrichtung, die ein zwischen einer Ruheposition und einer Rückhalteposition bewegbares Rückhaltemittel aufweist, wobei das Rückhaltemittel derart gestaltet ist, dass es in Rückhalteposition ein Herausfallen einer Bedienperson aus einem Fahrerplatz des Flurförderzeugs verhindert, und wobei die Fahrerrückhaltevorrichtung eine Stellvorrichtung aufweist, mit der das Rückhaltemittel zwischen der Ruheposition und der Rückhalteposition bewegbar ist.

Fahrerrückhaltevorrichtungen der genannten Art kommen für alle Flurförderzeug mit einer seitlich offenen Fahrerkabine, wie beispielsweise Gegengewichtsgabelstapler, in Betracht. Die Fahrerrückhaltevorrichtung dient dazu, in Unfallsituationen, insbesondere bei einem Umkippen des Flurförderzeugs, ein Herausfallen der Bedienperson aus einem seitlich offenen Fahrerplatz zu verhindern. Hierdurch werden schwerwiegende Verletzungen der Bedienperson vermieden, die dadurch entstehen können, dass eine aus dem Flurförderzeug heraus gefallene Bedienperson zwischen der Fahrbahn und einem Teil des Flurförderzeugs eingeklemmt wird.

In der Regel sind die Fahrerrückhaltevorrichtungen derart ausgeführt, dass das Rückhaltemittel von der Bedienperson manuell zwischen der Ruheposition und der Rückhalteposition zu bewegen ist. Es kommt dabei aber häufig vor, dass die Bedienperson das Rückhaltemittel aus Bequemlichkeit auch während des Fahrens und während des Hebens von Lasten in der Ruheposition belässt. In der Ruheposition des Rückhaltemittels ist der Bedienperson ein ungehindertes Ein- und Aussteigen ermöglicht. Eine Schutzfunktion für die Bedienperson ist dabei nicht vorhanden.

Um einen Betrieb des Flurförderzeugs mit in Ruheposition befindlichem Rückhaltemittel zu vermeiden, ist es bekannt, die Fahrerrückhaltevorrichtung mit einer Stellvorrichtung auszurüsten, welche das Rückhaltemittel automatisch zwischen der Ruheposition und der Rückhalteposition bewegt. Die hierzu im Stand der Technik bekannten Lösungen erweisen sich jedoch für den praktischen Einsatz als zu wenig ausgereift. Entweder kann die Sicherheit der Bedienperson nicht vollständig gewährleistet werden, weil Betriebssituationen möglich sind, in denen das Rückhaltemittel trotz eines vorhandenen Gefahrenpotentials nicht aktiviert ist. Andererseits kommt es häufig vor, dass die Bedienperson durch das in Rückhalteposition befindliche Rückhaltemittel in der Arbeit behindert wird.

Aus der EP 1 686 015 A2 ist ein gattungsgemäßes Flurförderzeug bekannt.

Der Erfindung liegt daher die Aufgabe zugrunde, ein Flurförderzeug mit einer Fahrerrückhaltevorrichtung zur Verfügung zu stellen, das ein Höchstmaß an Betriebssicherheit für die Bedienperson bietet und bei dem der Arbeitsablauf durch die Fahrerrückhaltevorrichtung so wenig wie möglich beeinträchtigt ist.

Diese Aufgabe wird erfindungsgemäß dadurch gelöst, dass die Stellvorrichtung durch eine elektrische Steuervorrichtung ansteuerbar ist, welche zumindest folgende Eingangsgrößen auswertet:
- ein Signal eines von einer Bedienperson betätigbaren Bedienelements für die Fahrerrückhaltevorrichtung,
- ein die momentane Fahrgeschwindigkeit des Flurförderzeugs wiedergebendes Signal. Die Steuervorrichtung steuert die Stelivorrichtung nach Maßgabe dieser beiden Eingangsgrößen an. In erster Linie ist es die Bedienperson, die mittels des Bedienelements steuert, welche Position das Rückhaltemittel einnehmen soll. Darüber hinaus wird das Rückhaltemittel von der Steuervorrichtung in bestimmten Betriebssituationen automatisch bewegt, insbesondere dann, wenn eine bestimmte Fahrgeschwindigkeit überschritten oder unterschritten wird. Es sind aber auch Betriebssituationen möglich, in denen das Rückhaltemittel nicht bewegt wird, obwohl die Bedienperson mit dem Bedienelement ein entsprechendes Signal vorgegeben hat, beispielsweise, wenn ein Fahrgeschwindigkeitssignal vorliegt, das ein Bewegen des Rückhaltemittels nicht erlaubt. In diesem Fall wird das Bedienelement in Abhängigkeit von einer Verknüpfung des Signals des Bedienelements und des Signal für die Fahrgeschwindigkeit gesteuert. Konkret kann es beispielsweise vorkommen, dass das Rückhaltemittel dann bewegt wird, wenn das Bedienelement betätigt wurde und gleichzeitig oder wenig später eine definierte Fahrgeschwindigkeit überschritten oder unterschritten ist.

Eine Weiterbildung der Erfindung sieht vor, dass die elektrische Steuervorrichtung als weitere Eingangsgröße ein Signal eines Positionssensors für das bewegbare Rückhaltemittel auswertet. Der Positionssensor erkennt, ob sich das Rückhaltemittel in Rückhalteposition befindet oder nicht. Der Positionssensor kann beispielsweise an eine Verriegelungsvorrichtung für das Rückhaltemittel gekoppelt sein. In Rückhalteposition befindet sich das Rückhaltemittel definitionsgemäß nur dann, wenn es in dieser Stellung auch verriegelt ist.

Die elektrische Steuervorrichtung wertet als weitere Eingangsgröße ein die momentane Hubhöhe eines Lastaufnahmemittels des Flurförderzeugs wiedergebendes Signal aus. Ebenso wie die Fahrgeschwindigkeit ist die Hubhöhe eine wichtige Kenngröße für den Betriebszustand des Flurförderzeugs, insbesondere für die Gefahr eines Umkippens. Die Bewegung des Rückhaltemittels erfolgt dann in bestimmten Betriebssituation auch in Abhängigkeit von der Hubhöhe.

Darüber hinaus wertet die elektrische Steuervorrichtung als weitere Eingangsgröße ein Signal eines Sitzbelegungsschalters des Flurförderzeugs aus. Voraussetzung für das Schließen des Rückhaltemittels und/oder für das Fahren und/oder für das Heben kann es beispielsweise sein, dass die Bedienperson auf dem Fahrersitz sitzt.

Gemäß einer ersten Funktionalität ist die elektrische Steuervorrichtung derart ausgeführt, dass das Rückhaltemittel in die Rückhalteposition bewegt wird, wenn das Bedienelement für die Fahrerrückhaltevorrichtung entsprechend betätigt wird. Dies entspricht der Grundfunktion, wonach die Bedienperson die Bewegung des Rückhaltemittels mittels des Bedienelements steuert.

Weiter ist die elektrische Steuervorrichtung derart ausgeführt, dass das Rückhaltemittel in die Rückhalteposition bewegt wird, wenn die Fahrgeschwindigkeit des Flurförderzeugs einen definierten Grenzwert überschreitet. Hier wird dem Umstand Rechnung getragen, dass die Gefahr eines Umkippens des Flurförderzeugs mit zunehmender Fahrgeschwindigkeit ansteigt. Wenn schneller als der Grenzwert gefahren wird, schließt das Rückhaltemittel automatisch.

Der genannte Grenzwert für die Fahrgeschwindigkeit ist auf einen Wert zwischen 3 km/h und 10 km/h, vorzugsweise zwischen 3 km/h und 7 km/h eingestellt. Zweckmäßig ist insbesondere ein Grenzwert für die Fahrgeschwindigkeit von 5 km/h.

Ebenso zweckmäßig ist es, wenn die elektrische Steuervorrichtung derart ausgeführt ist, dass das Rückhaltemittel in die Rückhalteposition bewegt wird, wenn die Hubhöhe des Lastaufnahmemittels einen definierten Grenzwert überschreitet. Es wird hier berücksichtigt, dass die Gefahr eines Umkippens des Flurförderzeugs auch mit zunehmender Hubhöhe ansteigt. Wenn über den Grenzwert hinaus gehoben wird, schließt das Rückhaltemittel automatisch.

Der Grenzwert für die Hubhöhe ist auf einen Wert zwischen 1 Meter und 2 Metern eingestellt. Zweckmäßig ist insbesondere ein Grenzwert für die Hubhöhe von 1,5 Metern.

Durch die elektrische Steuervorrichtung ist eine optische und/oder eine akustische Warneinrichtung ansteuerbar, derart, dass ein Warnsignal erzeugt wird, wenn mit dem Flurförderzeug gefahren wird und sich gleichzeitig das Rückhaltemittel in Ruhestellung befindet. Das Warnsignal wird immer dann erzeugt, wenn mit dem Flurförderzeug gefahren wird, obwohl die Fahrerrückhalteeinrichtung nicht aktiviert ist.

Durch die elektrische Steuervorrichtung ist eine optische und/oder eine akustische Warneinrichtung ansteuerbar, derart, dass ein Warnsignal erzeugt wird, wenn das Lastaufnahmemittel angehoben wird und sich gleichzeitig das Rückhaltemittel in Ruhestellung befindet. Das Warnsignal wird immer dann erzeugt, wenn das Lastaufnahmemittel des Flurförderzeugs angehoben wird, obwohl die Fahrerrückhalteeinrichtung nicht aktiviert ist.

Die elektrische Steuervorrichtung ist derart ausgeführt, dass das Rückhaltemittel in die Ruheposition bewegt wird, wenn das Bedienelement entsprechend betätigt wird und gleichzeitig die Fahrgeschwindigkeit des Flurförderzeugs einen definierten Schwellwert unterschreitet. Die Bedienperson kann das Rückhaltemittel nur dann durch Betätigen des Bedienelements von der Rückhaltestellung in die Ruheposition bewegen, wenn die Fahrgeschwindigkeit geringer ist als der Schwellwert.

Alternativ hierzu kann die elektrische Steuervorrichtung derart ausgeführt sein, dass das Rückhaltemittel in die Ruheposition bewegt wird, wenn das Bedienelement entsprechend betätigt wird und anschließend, innerhalb einer definierten Verzögerungszeit, die Fahrgeschwindigkeit des Flurförderzeugs einen definierten Schwellwert unterschreitet. Die Fahrgeschwindigkeit muss den Schwellwert dabei nicht schon zum Zeitpunkt des Betätigens des Bedienelements unterschreiten. Wenn die Steuervorrichtung eine Betätigung des Bedienelements registriert hat, wird die Fahrgeschwindigkeit über die daran anschließende Verzögerungszeit beobachtet. Wenn innerhalb dieser Verzögerungszeit die Fahrgeschwindigkeit den Schwellwert unterschreitet, wird das Rückhaltemittel in Ruheposition bewegt.

Zweckmäßigerweise ist die Verzögerungszeit auf einen Wert zwischen 5 Sekunden und 15 Sekunden eingestellt. Besonders zweckmäßig ist insbesondere eine Verzögerungszeit von 10 Sekunden.

Der Schwellwert für die Fahrgeschwindigkeit ist auf einen Wert zwischen 1 km/h und 5 km/h, vorzugsweise zwischen 1 km/h und 3 km/h, besonders bevorzugt auf 2 km/h eingestellt. Wenn dieser Geschwindigkeitswert unterschritten ist, kann die Fahrerrückhalteeinrichtung durch Betätigen des Bedienelements geöffnet werden.

Mit besonderem Vorteil ist das Bedienelement in ein Bedienpult des Flurförderzeugs integriert. Das Bedienelement für die Fahrerrückhalteeinrichtung befindet sich dabei in unmittelbarer Nähe der übrigen Betätigungselemente des Flurförderzeugs und ist leicht erreichbar. Für die Betätigung des Bedienelements kann die Bedienperson ihre Körperhaltung beibehalten, die sie im Flurförderzeug auch sonst einnimmt.

Das Bedienelement ist als berührungslos betätigbarer Sensor ausgeführt. Beispielsweise kommt die Verwendung eines kapazitiven Sensors in Betracht. Der Vorteil eines berührungslosen Sensors ist, dass die Bedienperson keinerlei Betätigungskraft aufbringen muss. Es genügt beispielsweise das Berühren der Oberfläche einer Abdeckung des Sensors.

Zweckmäßig ist es weiterhin, wenn das Rückhalteelement einen schwenkbaren Bügel aufweist. In der Rückhaltestellung befindet sich der schwenkbare Bügel vor der seitlichen Öffnung des Fahrerplatzes. In der Ruhestellung ist der Bügel senkrecht in der Nähe eines hinteren Holms der Fahrerkabine angeordnet.

Die Sicherheit wird weiter erhöht, wenn das Rückhalteelement ein Netz aufweist, das von dem in Rückhalteposition befindlichen Bügel aufgespannt wird. Das von dem Bügel aufgespannte Netz verschließt die seitliche Öffnung des Fahrerplatzes vollständig. Die Flexibilität des Netzes verhindert Verletzungen der Bedienperson, wenn diese während eines Unfalls auf dem Netz auftrifft.

Die Stellvorrichtung weist einen Elektromotor auf. Mit der Kraft des Elektromotors wird der Bügel in beide Richtungen zwischen der Ruheposition und der Rückhalteposition bewegt. Alternativ kann der Antrieb beispielsweise mittels pneumatischer oder hydraulischer Stellglieder erfolgen.

Weitere Vorteile und Einzelheiten der Erfindung werden anhand des in den schematischen Figuren dargestellten Ausführungsbeispiels näher erläutert. Dabei zeigt
- Figur 1: den Fahrerplatz eines erfindungsgemäßen Flurförderzeugs,
- Figur 2: den Fahrerplatz in Seitenansicht mit in Rückhalteposition befindlichem Rückhaltemittel.

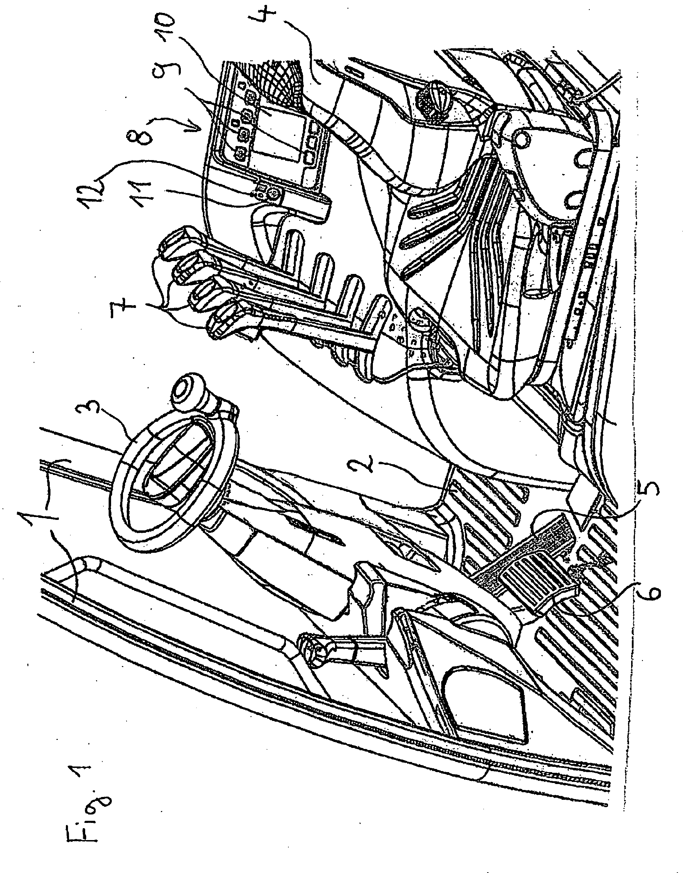

In Figur 1 ist der Fahrerplatz eines erfindungsgemäßen Flurförderzeugs dargestellt. Hierbei wird von der seitlichen Öffnung des Fahrerplatzes, an der sich das bewegbare Rückhaltemittel der Fahrerrückhaltevorrichtung befindet, in den Fahrerplatz hinein geblickt. Die Rückhaltevorrichtung selbst ist in dieser Ansicht nicht sichtbar. Zu erkennen sind zwei vordere Holme 1 der Fahrerkabine, eine Bodenplatte 2, ein Lenkrad 3 und ein Fahrersitz 4. Im Bereich der Bodenplatte sind ein Fahrpedal 5 und ein Bremspedal 6 angeordnet. Rechts vor dem Fahrersitz 4 befinden sich vier Bedienhebel 7 zur Betätigung der Lasthandhabungsfunktionen des Flurförderzeugs. Seitlich, auf der rechten Seite des Fahrersitzes 4 ist ein Bedientableau 8 angeordnet, das mehrere Bedienelemente 9 und ein in diesem Fall als LCD-Bildschirm ausgeführtes Anzeigeelement 10 umfasst.

Ein Bedienelement 11 zur Betätigung der Fahrerrückhalteeinrichtung befindet sich links neben dem Bedientableau 8. Das Bedienelement 11 umfasst einen berührungslos betätigbaren induktiven Sensor, der sich unter einer Abdeckung aus Kunststoff befindet. Die Abdeckung kann dabei auch von einer Kunststofffolie gebildet sein. Die Oberfläche der Abdeckung weist an der Stelle, unter der sich der Sensor befindet, eine Markierung auf. Zur Betätigung des Bedienelements 11 genügt es, wenn die Bedienperson die Abdeckung im Bereich der Markierung berührt. Eine Betätigungskraft ist nicht aufzubringen. In der Nähe des Bedienelements 11 befindet sich ein optisches Anzeigeelement 12, beispielsweise eine Leuchtdiode, welches eine Betätigung des Bedienelements 11 und/oder die Stellung des Rückhaltemittels signalisiert.

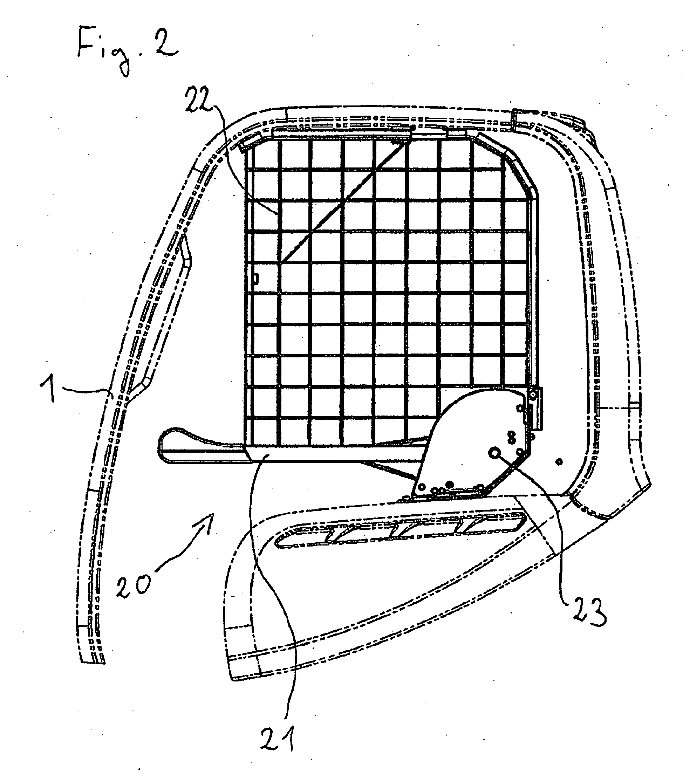

Figur 2 zeigt den Fahrerplatz in Seitenansicht mit in Rückhalteposition befindlichem Rückhaltemittel 20. Das Rückhaltemittel 20 umfasst einen um eine Achse 23 schwenkbaren Bügel 21 und ein flexibles Netz 22, das von dem Bügel 21 aufgespannt wird. In der dargestellten Rückhalteposition verschließt das Rückhaltemittel 20 die seitliche Öffnung des Fahrerplatzes so vollständig, dass ein Herausfallen der Bedienperson aus dem Fahrerplatz - auch während eines seitlichen Umkippens des Flurförderzeugs - sicher verhindert ist. Zum Bewegen des Rückhaltemittels 20 in Ruheposition wird der Bügel 21 im Gegenuhrzeigersinn um die Achse 23 in eine senkrechte Stellung geschwenkt, wobei das Netz 22 zusammengefaltet wird. Ein Auf-und Absteigen der Bedienperson ist dann ungehindert möglich.

Eine nicht dargestellte Stellvorrichtung, die von einer elektrischen Steuervorrichtung angesteuert wird, bewegt das Rückhaltemittel 20 nach folgender Maßgabe:

Die Steuerung des Rückhaltesystems erfolgt mit einem kombinierten Konzept, das auf minimale Störung des Arbeitsablaufes optimiert ist. Der Wunsch der Bedienperson zum Öffnen oder Schließen des Rückhaltemittels 20 wird über das leicht zu betätigende Bedienelement 11 an die Steuervorrichtung gegeben. Dieses Bedienelement 11 ist so angeordnet, dass es sich in der Nähe der normalen Bedienposition der rechten Hand befindet und mit einer geringfügigen Bewegung "blind", schnell und komfortabel schalten lässt. Die Steuervorrichtung, bei der es sich um die Fahrzeugsteuerung selbst handeln kann, aktuiert das Bewegen des Bügels 21 und erhält vom Bügel 21 ein Sensorsignal über den Zustand des Systems (geschlossen und verriegelt bzw. nicht verriegelt).

Mit Hilfe der Software der Steuervorrichtung werden folgende Betätigungsvorgänge realisiert:
1. Schließen des Rückhaltemittels 20:
   1a. Der Fahrer sitzt auf dem Fahrersitz 4, betätigt das Bedienelement 11 für das Rückhaltemittel 20 und fährt los. Die Geschwindigkeit des Flurförderzeugs ist auf (hier) max. 5 km/h begrenzt, bis der Bügel 21 geschlossen und verriegelt ist, danach wird die Geschwindigkeit freigegeben. Da das Schließen weniger als 2 Sekunden dauert, merkt der Fahrer in diesem Fall keine Einschränkung.
   1b. Der Fahrer fährt los, ohne das Bedienelement 11 zu betätigen. Er erhält von der Anzeigeeinheit im Armaturenbrett ein blinkendes Warnsignal. Zusätzlich blinken, wenn als Option vorhanden, außen alle 4 Fahrtrichtungsblinkleuchten. Trotzdem kann das Flurförderzeug bis auf 5 km/h beschleunigt werden. Sobald die Geschwindigkeit 5 km/h erreicht, schließt die Steuervorrichtung den Bügel 21 selbsttätig. Die Fahrgeschwindigkeit bleibt wiederum auf 5 km/h begrenzt, bis der Sensor die ordnungsgemäße Verriegelung des Bügels 21 an die Steuervorrichtung meldet.
   Die Information an den Fahrer kann auch akustisch ausgeführt werden durch eine geeignete Signalquelle. Die Warnsignale, die ein nicht geschlossenes Rückhaltesystem anzeigen, werden dann wieder deaktiviert.
2. Öffnen des Rückhaltebügels
   2a. Der Fahrer betätigt das Bedienelement 11 bei Stillstand des Flurförderzeugs. Der Rückhaltebügel wird geöffnet, Dauer <= 1 Sekunde.
   2b. Vorwahlfunktion: Der Fahrer betätigt das Bedienelement 11 während der Fahrt, wenn er beabsichtigt, demnächst anzuhalten. Die Steuervorrichtung speichert diese Vorwahl für (hier) 10 Sekunden und zeigt die Vorwahl durch eine Signalleuchte im Armaturenbrett an. Sobald das Flurförderzeug die Geschwindigkeit von (hier) 2 km/h unterschreitet, öffnet der Rückhaltebügel und erlischt die Signalleuchte. Wenn der Fahrer nicht innerhalb von 10 Sekunden nach der Vorwahl die Geschwindigkeit auf unter 2 km/h reduziert, wird die gespeicherte Vorwahl gelöscht. Vorteil der Vorwahl ist, dass der Öffnungsvorgang beim Verzögern des Flurförderzeugs bereits kurz vor dem Stillstand beginnt, sodass der Fahrer das Flurförderzeug sofort bei Stillstand verlassen kann, ohne Verzögerung durch den Öffnungsvorgang.

### Konkrete Ausführung:

Das Bedienelement 11 ist ein kapazitiver Sensor unterhalb der Seitenverkleidung. Der Fahrer benötigt nur eine geringe Bewegung der Hand, um die Verkleidung oberhalb des Sensors zu berühren, so dass dieser ein Signal an die Steuervorrichtung gibt. Der empfindliche Bereich ist durch ein Hinweisschild auf der Verkleidung gekennzeichnet. Das mit dieser Schaltung betätigte Rückhaltemittel 20 ist im konkreten Fall ein elektromotorisch schwenkbarer Bügel 21, der ein Netz 21 aufspannt.

## Patentansprüche

1. Flurförderzeug mit einer Fahrerrückhaltevorrichtung, die ein zwischen einer Ruheposition und einer Rückhalteposition bewegbares Rückhaltemittel (20) aufweist, wobei das Rückhaltemittel (20) derart gestaltet ist, dass es in Rückhalteposition ein Herausfallen einer Bedienperson aus einem Fahrerplatz des Flurförderzeugs verhindert, und wobei die Fahrerrückhaitevorrichtung eine Stellvorrichtung aufweist, mit der das Rückhaltemittel (20) zwischen der Ruheposition und der Rückhalteposition bewegbar ist, wobei
die Stellvorrichtung durch eine elektrische Steuervorrichtung ansteuerbar ist, welche zumindest folgende Eingangsgrößen auswertet:
- ein Signal eines von einer Bedienperson betätigbaren Bedienelements (11) für die Fahrerrückhaltevorrichtung,
- ein die momentane Fahrgeschwindigkeit des Flurförderzeugs wiedergebendes Signal,
**dadurch gekennzeichnet,**
**dass** die elektrische Steuervorrichtung derart ausgeführt ist, dass das Rückhaltemittel (20) in die Ruheposition bewegt wird, wenn das Bedienelement (11) entsprechend betätigt wird und anschließend, innerhalb einer definierten Verzögerungszeit, die Fahrgeschwindigkeit des Flurförderzeugs einen definierten Schwellwert unterschreitet.

2. Flurförderzeug nach Anspruch 1,
**dadurch gekennzeichnet,**
**dass** die elektrische Steuervorrichtung als weitere Eingangsgröße ein Signal eines Positionssensors für das bewegbare Rückhaltemittel (20) auswertet

3. Flurförderzeug nach Anspruch 1 oder 2,
**dadurch gekennzeichnet,**
**dass** die elektrische Steuervorrichtung als weitere Eingangsgröße ein die momentane Hubhöhe eines Lastaufnahmemittels des Flurförderzeugs wiedergebendes Signal auswertet.

4. Flurförderzeug nach einem der Ansprüche 1 bis 3,
**dadurch gekennzeichnet,**
**dass** die elektrische Steuervorrichtung als weitere Eingangsgröße ein Signal eines Sitzbelegungsschalters des Flurförderzeugs auswertet.

5. Flurförderzeug nach einem der Ansprüche 1 bis 4,
**dadurch gekennzeichnet,**
**dass** die elektrische Steuervorrichtung derart ausgeführt ist, dass das Rückhaltemittel (20) in die Rückhalteposition bewegt wird, wenn das Bedienelement (11) für die Fahrerrückhaltevorrichtung entsprechend betätigt wird.

6. Flurförderzeug nach einem der Ansprüche 1 bis 5,
**dadurch gekennzeichnet,**
**dass** die elektrische Steuervorrichtung derart ausgeführt ist, dass das Rückhaltemittel (20) in die Rückhalteposition bewegt wird, wenn die Fahrgeschwindigkeit des Flurförderzeugs einen definierten Grenzwert überschreitet.

7. Flurförderzeug nach Anspruch 6,
**dadurch gekennzeichnet,**
**dass** der Grenzwert für die Fahrgeschwindigkeit auf einen Wert zwischen 3 km/h und 10 km/h, vorzugsweise zwischen 3 km/h und 7 km/h eingestellt ist.

8. Flurförderzeug nach einem der Ansprüche 1 bis 7,
**dadurch gekennzeichnet,**
**dass** die elektrische Steuervorrichtung derart ausgeführt ist, dass das Rückhaltemittel (20) in die Rückhalteposition bewegt wird, wenn die Hubhöhe des Lastaufnahmemittels einen definierten Grenzwert überschreitet.

9. Flurförderzeug nach Anspruch 8,
**dadurch gekennzeichnet,**
**dass** der Grenzwert für die Hubhöhe auf einen Wert zwischen 1 Meter und 2 Metern eingestellt ist.

10. Flurförderzeug nach einem der Ansprüche 1 bis 9,
**dadurch gekennzeichnet,**
**dass** durch die elektrische Steuervorrichtung eine optische und/oder eine akustische Warneinrichtung ansteuerbar ist, derart, dass ein Warnsignal erzeugt wird, wenn mit dem Flurförderzeug gefahren wird und sich gleichzeitig das Rückhaltemittel (20) in Ruhestellung befindet.

11. Flurförderzeug nach einem der Ansprüche 1 bis 10,
**dadurch gekennzeichnet,**
**dass** durch die elektrische Steuervorrichtung eine optische und/oder eine akustische Warneinrichtung ansteuerbar ist, derart, dass ein Warnsignal erzeugt wird, wenn das Lastaufnahmemittel angehoben wird und sich gleichzeitig das Rückhaltemittel (20) in Ruhestellung befindet.

12. Flurförderzeug nach einem der Ansprüche 1 bis 11,
**dadurch gekennzeichnet,**
**dass** die elektrische Steuervorrichtung derart ausgeführt ist, dass das Rückhaltemittel (20) in die Ruheposition bewegt wird, wenn das Bedienelement (11) entsprechend betätigt wird und gleichzeitig die Fahrgeschwindigkeit des Flurförderzeugs einen definierten Schwellwert unterschreitet.

13. Flurförderzeug nach einem der Ansprüche 1 bis 12,
**dadurch gekennzeichnet,**
**dass** die Verzögerungszeit auf einen Wert zwischen 5 Sekunden und 15 Sekunden eingestellt ist.

14. Flurförderzeug nach einem der Ansprüche 1 bis 13,
**dadurch gekennzeichnet,**
**dass** der Schwellwert für die Fahrgeschwindigkeit auf einen Wert zwischen 1 km/h und 5 kmlh, vorzugsweise zwischen 1 km/h und 3 km/h eingestellt ist.

15. Flurförderzeug nach einem der Ansprüche 1 bis 14,
**dadurch gekennzeichnet,**
**dass** das Bedienelement (11) in ein Bedienpult des Flurförderzeugs integriert ist.

16. Flurförderzeug nach einem der Ansprüche 1 bis 15,
**dadurch gekennzeichnet,**
**dass** das Bedienelement (11) als berührungslos betätigbarer Sensor ausgeführt ist.

17. Flurförderzeug nach einem der Ansprüche 1 bis 16,
**dadurch gekennzeichnet,**
**dass** das Rückhalteelement einen schwenkbaren Bügel (21) aufweist.

18. Flurförderzeug nach Anspruch 17,
**dadurch gekennzeichnet,**
**dass** das Rückhalteelement ein Netz (22) aufweist, das von dem in Rückhalteposition befindlichen Bügel (21) aufgespannt wird.

19. Flurförderzeug nach einem der Ansprüche 1 bis 18,
**dadurch gekennzeichnet,**
**dass** die Stellvorrichtung einen Elektromotor aufweist.

## Claims

1. Industrial truck with a driver restraint device, which has a restraint means (20) capable of moving between a rest position and a restraint position, the restraint means (20) being designed in such a way that, in the restraint position, it prevents an operator from falling out of a driver's station of the industrial truck, and the driver restraint device having an actuating device, with which the restraint means (20) can be moved between the rest position and the restraint position, the actuating device being capable of being driven by an electric control device, which evaluates at least the following input variables:
- a signal from a control element (11), which can be actuated by an operator, for the driver restraint device,
- a signal which reproduces the instantaneous driving speed of the industrial truck,
**characterized in that** the electric control device is designed in such a way that the restraint means (20) is moved into the rest position when the control element (11) is actuated correspondingly and then, within a defined delay time, the driving speed of the industrial truck falls below a defined threshold value.

2. Industrial truck according to Claim 1, **characterized in that** the electric control device evaluates, as a further input variable, a signal from a position sensor for the movable restraint means (20).

3. Industrial truck according to Claim 1 or 2, **characterized in that** the electric control device evaluates, as further input variable, a signal which reproduces the instantaneous lifting height of a load pickup means of the industrial truck.

4. Industrial truck according to one of Claims 1 to 3, **characterized in that** the electric control device evaluates, as a further input variable, a signal from a seat occupation switch of the industrial truck.

5. Industrial truck according to one of Claims 1 to 4, **characterized in that** the electric control device is designed in such a way that the restraint means (20) is moved into the restraint position when the control element (11) for the driver restraint device is actuated correspondingly.

6. Industrial truck according to one of Claims 1 to 5, **characterized in that** the electric control device is designed in such a way that the restraint means (20) is moved into the restraint position when the driving speed of the industrial truck exceeds a defined limit value.

7. Industrial truck according to Claim 6, **characterized in that** the limit value for the driving speed is set to a value of between 3 km/h and 10 km/h, preferably between 3 km/h and 7 km/h.

8. Industrial truck according to one of Claims 1 to 7, **characterized in that** the electric control device is designed in such a way that the restraint means (20) is moved into the restraint position when the lifting height of the load pickup means exceeds a defined limit value.

9. Industrial truck according to Claim 8, **characterized in that** the limit value for the lifting height is set to a value of between 1 metre and 2 metres.

10. Industrial truck according to one of Claims 1 to 9, **characterized in that** the electric control device can be used to drive an optical and/or acoustic warning device in such a way that a warning signal is produced when the industrial truck is driven and at the same time the restraint means (20) is located in the rest position.

11. Industrial truck according to one of Claims 1 to 10, **characterized in that** the electric control device can be used to drive an optical and/or acoustic warning device in such a way that a warning signal is produced when the load pickup means is raised and at the same time the restraint means (20) is located in the rest position.

12. Industrial truck according to one of Claims 1 to 11, **characterized in that** the electric control device is designed in such a way that the restraint means (20) is moved into the rest position when the control element (11) is actuated correspondingly and at the same time the driving speed of the industrial truck falls below a defined threshold value.

13. Industrial truck according to one of Claims 1 to 12, **characterized in that** the delay time is set to a value of between 5 seconds and 15 seconds.

14. Industrial truck according to one of Claims 1 to 13, **characterized in that** the threshold value for the driving speed is set to a value of between 1 km/h and 5 km/h, preferably between 1 km/h and 3 km/h.

15. Industrial truck according to one of Claims 1 to 14, **characterized in that** the control element (11) is integrated in a control panel of the industrial truck.

16. Industrial truck according to one of Claims 1 to 15, **characterized in that** the control element (11) is in the form of a sensor which can be actuated in contactless fashion.

17. Industrial truck according to one of Claims 1 to 16, **characterized in that** the restraint element has a pivotable bracket (21).

18. Industrial truck according to Claim 17, **characterized in that** the restraint element has a net (22) which is tensioned by the bracket (21) located in the restraint position.

19. Industrial truck according to one of Claims 1 to 18, **characterized in that** the actuating device has an electric motor.

## Revendications

1. Chariot de manutention comprenant un dispositif de retenue du conducteur, qui présente un moyen de retenue (20) déplaçable entre une position de repos et une position de retenue, le moyen de retenue (20) étant configuré de telle sorte que, dans une position de retenue, il empêche un opérateur de tomber d'un poste de travail sur le chariot de manutention, et dans lequel le dispositif de retenue du conducteur présente un dispositif de réglage avec lequel le moyen de retenue (20) peut être déplacé entre la position de repos et la position de retenue, le dispositif de réglage pouvant être commandé par un dispositif de commande électrique qui analyse au moins les valeurs d'entrée suivantes :
- un signal d'un élément de commande (11) pour le dispositif de retenue de conducteur pouvant être actionné par un opérateur,
- un signal reproduisant la vitesse instantanée de conduite du chariot de manutention,
**caractérisé en ce que**
le dispositif de commande électrique est réalisé de telle sorte que le moyen de retenue (20) soit déplacé dans la position de repos, lorsque l'élément de commande (11) est actionné en conséquence, et qu'ensuite, en l'espace d'un temps de ralentissement défini, la vitesse de conduite du chariot de manutention soit réduite en dessous d'une valeur seuil définie.

2. Chariot de manutention selon la revendication 1,
**caractérisé en ce que**
le dispositif de commande électrique analyse, en tant que valeur d'entrée supplémentaire, un signal d'un capteur de position pour le moyen de retenue déplaçable (20).

3. Chariot de manutention selon la revendication 1 ou 2,
**caractérisé en ce que**
le dispositif de commande électrique analyse, en tant que valeur d'entrée supplémentaire, un signal reproduisant la hauteur de levage instantanée d'un moyen de réception de la charge du chariot de manutention.

4. Chariot de manutention selon l'une quelconque des revendications 1 à 3,
**caractérisé en ce que**
le dispositif de commande électrique analyse, en tant que valeur d'entrée supplémentaire, un signal d'un commutateur d'occupation de siège du chariot de manutention.

5. Chariot de manutention selon l'une quelconque des revendications 1 à 4,
**caractérisé en ce que**
le dispositif de commande électrique est réalisé de telle sorte que le moyen de retenue (20) soit déplacé dans la position de retenue lorsque l'élément de commande (11) pour le dispositif de retenue du conducteur est actionné de manière correspondante.

6. Chariot de manutention selon l'une quelconque des revendications 1 à 5,
**caractérisé en ce que**
le dispositif de commande électrique est réalisé de telle sorte que le moyen de retenue (20) soit déplacé dans la position de retenue, lorsque la vitesse de conduite du chariot de manutention dépasse une valeur limite définie.

7. Chariot de manutention selon la revendication 6,
**caractérisé en ce que**
la valeur limite pour la vitesse de conduite est ajustée à une valeur comprise entre 3 km/h et 10 km/h, de préférence entre 3 km/h et 7 km/h.

8. Chariot de manutention selon l'une quelconque des revendications 1 à 7,
**caractérisé en ce que**
le dispositif de commande électrique est réalisé de telle sorte que le moyen de retenue (20) soit déplacé dans la position de retenue lorsque la hauteur de levage du moyen de réception de la charge dépasse une valeur limite définie.

9. Chariot de manutention selon la revendication 8,
**caractérisé en ce que**
la valeur limite pour la hauteur de levage est ajustée à une valeur comprise entre 1 m et 2 m.

10. Chariot de manutention selon l'une quelconque des revendications 1 à 9,
**caractérisé en ce que**
le dispositif de commande électrique permet de commander un dispositif d'avertissement optique et/ou acoustique, de telle sorte qu'un signal d'avertissement soit produit, lorsque le chariot de manutention est conduit et que le moyen de retenue (20) se trouve simultanément dans la position de repos.

11. Chariot de manutention selon l'une quelconque des revendications 1 à 10,
**caractérisé en ce que**
le dispositif de commande électrique permet de commander un dispositif d'avertissement optique et/ou acoustique de telle sorte qu'un signal d'avertissement soit produit, lorsque le moyen de réception de la charge est soulevé et que le moyen de retenue (20) se trouve simultanément dans la position de repos.

12. Chariot de manutention selon l'une quelconque des revendications 1 à 11,
**caractérisé en ce que**
le dispositif de commande électrique est réalisé de telle sorte que le moyen de retenue (20) soit déplacé dans la position de repos lorsque l'élément de commande (11) est actionné en conséquence, et que la vitesse de conduite du chariot de manutention descend simultanément en dessous d'une valeur seuil définie.

13. Chariot de manutention selon l'une quelconque des revendications 1 à 12,
**caractérisé en ce que**
le temps de ralentissement est ajusté à une valeur comprise entre 5 secondes et 15 secondes.

14. Chariot de manutention selon l'une quelconque des revendications 1 à 13,
**caractérisé en ce que**
la valeur seuil pour la vitesse de conduite est ajustée à une valeur comprise entre 1 km/h et 5 km/h, de préférence entre 1 km/h et 3 km/h.

15. Chariot de manutention selon l'une quelconque des revendications 1 à 14,
**caractérisé en ce que**
l'élément de commande (11) est intégré dans un pupitre de commande du chariot de manutention.

16. Chariot de manutention selon l'une quelconque des revendications 1 à 15,
**caractérisé en ce que**
l'élément de commande (11) est réalisé sous forme de capteur pouvant être actionné sans contact.

17. Chariot de manutention selon l'une quelconque des revendications 1 à 16,
**caractérisé en ce que**
l'élément de retenue présente un arceau pivotant (21).

18. Chariot de manutention selon la revendication 17,
**caractérisé en ce que**
l'élément de retenue présente un filet (22) qui est tendu depuis l'arceau (21) situé dans la position de retenue.

19. Chariot de manutention selon l'une quelconque des revendications 1 à 18,
**caractérisé en ce que**
le dispositif de réglage présente un moteur électrique.
